(19) Europäisches Patentamt
European Patent Office
Office européen des brevets

(11) Publication number: **0 105 341**
**B1**

(12) # EUROPEAN PATENT SPECIFICATION

(45) Date of publication of patent specification: **07.01.87**

(51) Int. Cl.$^4$: **C 08 G 77/04**

(21) Application number: **83901518.7**

(22) Date of filing: **28.03.83**

(86) International application number:
**PCT/US83/00430**

(87) International publication number:
**WO 83/03418 13.10.83 Gazette 83/24**

(54) **VINYLOXY-FUNCTIONAL ORGANOPOLYSILOXANES COMPOSITIONS.**

(30) Priority: **01.04.82 US 364303**

(43) Date of publication of application:
**18.04.84 Bulletin 84/16**

(45) Publication of the grant of the patent:
**07.01.87 Bulletin 87/02**

(84) Designated Contracting States:
**DE FR GB**

(56) References cited:
**GB-A-2 057 473**
**US-A-4 136 250**
**US-A-4 208 319**
**US-A-4 340 647**

(73) Proprietor: **GENERAL ELECTRIC COMPANY**
**1 River Road**
**Schenectady New York 12305 (US)**

(72) Inventor: **CRIVELLO, James Vincent**
**Carlton Road**
**Clifton Park NY 12065 (US)**
Inventor: **ECKBERG, Richard Paul**
**P.O. Box 451**
**Round Lake, NY 12151 (US)**

(74) Representative: **Catherine, Alain**
**General Electric - Deutschland Munich Patent**
**Operations Frauenstrasse 32**
**D-8000 München 5 (DE)**

**EP 0 105 341 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to organosiloxane polymers and curable compositions made therefrom. More particularly, it relates to organopolysiloxane compositions having vinyloxy functional groups, and to photocurable release coatings made therefrom which render a normally adherent surface relatively adhesive.

Silicone compositions have long been used as release coatings, which are useful in many applications whenever it is necessary to provide a surface or material which is relatively nonadherent to other materials which would normally adhere thereto. For example, silicone release compositions are widely used as coatings which release pressure-sensitive adhesives for labels, decorative laminates, transfer tapes, etc. Silicone release coatings on paper, polyethylene, Mylar®, and other such substrates are also useful to provide non-stick surfaces for food handling and industrial packaging applications.

Previously developed silicone paper release compositions, such as those described in U.S.—A—4340647, have been heat curable, but silicone resins which could be cured with exposure to ultraviolet light are desirable.

Ultraviolet light is one of the most widely used types of radiation because of its relatively low cost, ease of maintenance, and low potential hazard to industrial users. Typical curing times are much shorter and heat-sensitive materials can be safely coated and cured under UV light where thermal energy might damage the substrate.

UV-curable epoxy-functional silicones have been disclosed in U.S. 4,069,368 (Deyak). Because of their high reactivity, vinyloxy-functional silicones are highly attractive, but until now only the preparation of vinyl ether trialkoxysilanes, in Ger. Offen. 2,159,723 (9/14/73; Bier et al.), has been described; the successful synthesis of vinyloxy-functional silicone polymer resins has not been reported.

It has now been discovered that photo-curable vinyloxy-functional polysiloxane resins can be efficiently produced which are catalyzed by a wider variety of curing catalysts than the aforementioned epoxy-functional silicones and, when applied as release coatings to a substrate, cure to a tack-free, no-smear, adhesive surface in as little as 0.15 seconds. The extremely rapid potential cure rate of these materials, and their compatability with onium salts heretofore believed ineffective for ultraviolet-triggered polymerizations, makes the vinyloxy-functional polysiloxanes of the present invention extremely attractive to the silicone release coating and other industries.

Accordingly, it is an object of the present invention to provide vinyloxy-functional siloxane polymers.

It is a further object of this invention to provide novel UV-curable polysiloxane resins suitable for paper release applications.

It is a further object of this invention to provide UV-curable silicone compositions which may be catalyzed by a variety of onium salt curing catalysts.

It is a further object of this invention to provide UV-curable vinyloxy polysiloxane compositions having especially rapid cure rates.

These and other objects are accomplished herein by an organopolysiloxane having at least one Si-bonded vinyloxy functional group of the formula:

$$H_2C{=}CH{-}O{-}G{-}$$

wherein G is alkylene or alkylene interrupted by at least one of a divalent hetero-radical, selected from —O—, divalent phenylene or substituted divalent phenylene, or combinations of such hetero-radicals.

The features contemplated herein are polymers comprised of at least two organosiloxane units each having at least one Si-bonded vinyloxy functional group of the formula:

$$H_2C{=}CH{-}O{-}G{-}$$

where G is alkylene or alkylene interrupted by at least one of a divalent hetero-radical, selected from —O—, divalent phenylene or substituted divalent phenylene, or combinations of such hetero-radicals.

Also contemplated by this invention are photo-polymerizable compositions comprising (A) an organopolysiloxane having at least one Si-bonded vinyloxy functional group of the formula:

$$H_2C{=}CH{-}O{-}G{-}$$

where G is alkylene or alkylene interrupted by at least one of a divalent hetero-radical, selected from —O—, divalent phenylene or substituted divalent phenylene, or combinations of such hetero-radicals; and (B) a catalytic amount of an onium salt having the formula:

$$R_2I^+MX_n^-,\ \text{or}\ R_3S^+MX_n^-,\ \text{or}\ R_3Se^+MX_n^-,\ \text{or}\ R_4P^+MX_n^-,\ \text{or}\ R_4N^+MX_n^-,$$

where radicals represented by R can be the same or different organic radicals from 1 to 30 carbon atoms, including aromatic carbocyclic radicals of from 6 to 20 carbon atoms which can be substituted with from 1 to 4 monovalent radicals selected from $C_{(1-8)}$ alkoxy, $C_{(1-8)}$ alkyl, nitro, chloro, bromo, cyano, carboxy,

mercapto, etc. and also including aromatic heterocyclic radicals including, e.g. pyridyl, thiophenyl, pyranyl, etc.; and $MX_n^-$ is a non-basic, non-nucleophilic anion, typically, $BF_4^-$, $PF_6^-$, $SbCl_6^-$, $HSO_4^-$, $ClO_4^-$, etc.

In the above and following descriptions, the phrase "hetero-radical" means radicals selected from —O—, divalent phenylene and substituted divalent phenylene. In particular G may represent a propylene radical or a radical having the formula:

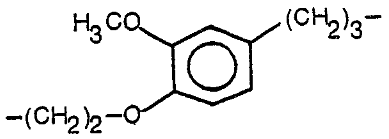

or

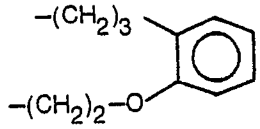

Also contemplated herein are a process for producing vinyloxy-functional polysiloxane resins and a process for producing release compositions based on such resins.

More specifically the process for producing vinyloxy-functional polysiloxane resins comprises the steps of:

(1) providing a compound having both allyl and vinyloxy functionality;

(2) reacting said difunctional compound with a silicon-containing compound containing at least 0.5 weight percent terminal or pendent Si—H groups in the presence of a small amount of a platinum catalyst; and

(3) recovering a product which is substantially all vinyloxy-functional polysiloxane having vinyloxy functional groups of

$$H_2C{=}CH{-}O{-}G{-}$$

where G is alkylene or alkylene interrupted by at least one of a divalent hetero-radical selected from —O—, divalent phenylene or substituted divalent phenylene, or combinations of such hetero-radicals.

The process for preparing release compositions according to the present invention comprises the steps of:

(1) providing a compound having both allyl and vinyloxy functionality;

(2) reacting said difunctional compound with a silicon-containing compound containing at least 0.5 weight percent terminal or pendent Si—H groups in the presence of a small amount of a platinum catalyst;

(3) recovering a product which is substantially all vinyloxy-functional polysiloxane having vinyloxy functional groups of the formula

$$H_2C{=}CH{-}O{-}G{-}$$

where G is alkylene or alkylene interrupted by at least one of a divalent hetero-radical selected from —O—, divalent phenylene or substituted divalent phenylene, or combinations of such hetero-radicals; and

(4) dissolving in said product a catalytic amount of an onium salt having the formula

$$R_2I^+MX_n^-, \text{ or } R_3S^+MX_n^-, \text{ or } R_3Se^+MX_n^-, \text{ or } R_4P^+MX_n^-, \text{ or } R_4N^+MX_n^-,$$

where R can be the same or different organic radical, including aromatic carbocyclic and heterocyclic radicals, of from 1 to 30 carbon atoms.

The vinyloxy-functional polysiloxanes of the present invention are prepared by hydrosilation of compounds containing both allyl and vinyl ether functional groups. The resulting vinyloxy-functional silicone resins can then be cured by dissolving a suitable photoinitiator in the resin and exposing it to ultraviolet radiation. The resin will harden to a tack-free, smear-free condition, usually in from one second to ten minutes, in many cases even less than one second.

The hydrosilation of vinyl ethers catalyzed by platinum compounds is well known. See, for example, Belezina and Alekseeve, Izv. Sibirsk. Otd. Akad. Nauk., SSSR Ser. Khim. Nauk., (3), 92(1963), Chem. Abstr. *54,* 11984(1960) and Sokolov, Grishko, Haznetsova and Sultangareve, Zh. Obshch. Khim., *37,* 260(1967), Chem. Abstr. *66,* 8915(1967), which document the following hydrosilations:

$$\text{(I)} \quad CH_3Cl_2SiH + CH_2 = CH{-}O{-}Ph \xrightarrow{H_2PtCl_6} CH_3Cl_2Si{-}CH_2{-}CH_2{-}O{-}Ph$$

$$\text{(II)} \quad CH_3Pr^nFSiH + CH_2 = CH{-}O{-}Bu^n \xrightarrow{H_2PtCl_6} CH_3Pr^nFSi{-}CH_2{-}CH_2{-}O{-}Bu^n$$

Similarly, hydrosilation of allyl ethers is also well known. U.S. 2,872,435 (Speier), Chem. Abstr. *53,* 13106 (1959), for example, describes the following:

(III) $CH_3Cl_2SiH + CH_2=CH-CH_2-O-CH_2-CH_2-CN \xrightarrow{H_2PtCl_6} CH_2Cl_2Si-CH_2-CH_2-CH_2-O-CH_2-CH_2-CN$

Allyl vinyl ether ($CH_2=CH—CH_2—O—CH=CH_2$), and compounds containing both vinyl ether and allyl ether functional groups, are expected to undergo silation at both unsaturated sites, and platinum-catalyzed reaction of allyl vinyl ethers with silicone resins containing terminal and pendent Si—H groups are expected to undergo cross-linking, based on (I)—(III), *supra.* It has been recently discovered, however, that the rate of ≡Si—H addition to allyl vinyl ethers is very much faster at the allyl site than at the vinyl site. This means that a vinyloxy-functional compound can be obtained preferentially from a reaction of allyl vinyl ethers and Si—H-containing compounds, as follows:

(IV) $\equiv Si-H + CH_2=CH-CH_2-O-CH=CH_2 \xrightarrow{H_2PtCl_6} \equiv Si-CH_2-CH_2-CH_2-O-CH=CH_2$

The discovery has made it possible to develop vinyloxy-functional polysiloxane resins, according to the following generalized scheme:

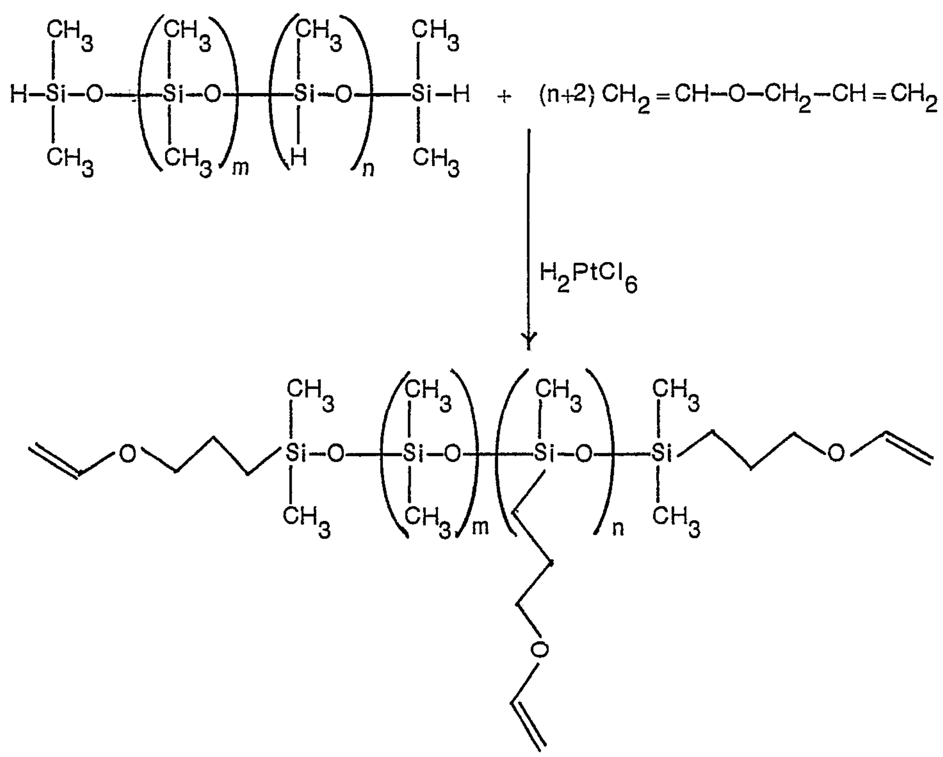


The vinyloxy-functional monomers composing the resins produced in like reactions are highly reactive in photoinitiated cationic polymerizations, and the polymer resins are consequently very active and give crosslinked resins.

Silicon-containing starting materials which are suitable for the purposes herein include any polysiloxane compound derived from at least two organosiloxane units and having terminal and/or pendent Si—H groups. The Si—H groups act as reaction sites in hydrosilation addition reactions like those described in equations (I)—(V), *supra.*

Preferred polysiloxane compounds for the purposes herein are polydimethyl-methylhydrogen siloxane copolymer fluids. It has been discovered that release compositions made according to this invention using these starting materials, form premium release coatings curable by brief exposure (e.g., <2 sec.) to UV radiation in the presence of onium salt catalyst. Furthermore, the vinyloxy-functional resins so prepared have been found to cure not only in the presence of bis(dodecylphenyl)iodonium hexafluoroantimonate, described for use with epoxy-functional silicones in U.S. 4,279,717 (Eckberg et al.), but also in the presence of bis(dodecylphenyl)iodonium bisulfate, $(C_{12}H_{25}Ph)_2IHSO_4$. The bisulfate salt is inactive in epoxy-functional silicone compositions but will successfully catalyze curing of vinyloxy compounds prepared as disclosed herein.

The suitability of the bisulfate salt catalyst for curing the silicone polymers of the present invention is an extremely important development because the bisulfate is much easier and cheaper to derive than the corresponding hexafluoroantimonates ($SbF_6^-$) and hexafluoroarsenates ($AsF_6^-$). Details of the preparation of $(C_{12}H_{25}Ph)_2IHSO_4$ are contained in U.S. 4,279,717.

The silicon-containing starting materials are reacted with compounds containing both allyloxy and vinyloxy functional groups. Allyl vinyl ether is an easily obtainable source, and is preferred. It has also been discovered that such compounds may be synthesized by adding vinyloxy functionality to an allyl-functional compound in reactions such as (VI) and (VII), below. For such syntheses, allylphenols are preferred; eugenol, which is a readily-obtainable natural product, is most preferred.

(VI)

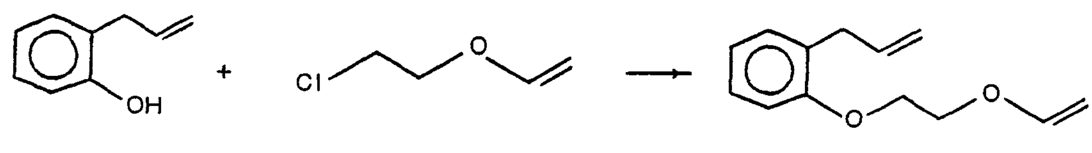

o-allyl phenol

2-chloroethyl vinyl ether

(VII)

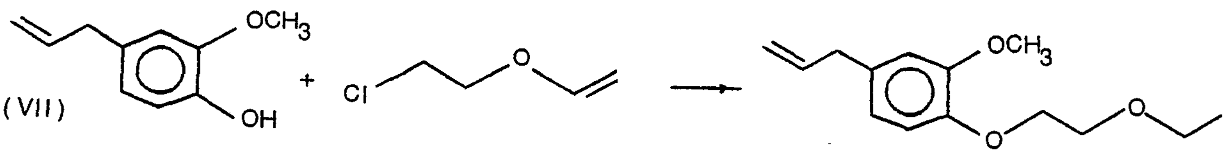

eugenol

Once an allyl- or allyloxy- and vinyloxy-functional compound is obtained, it may be reacted via hydrosilation addition, with the silicon-containing starting material described above, to yield a vinyloxy-functional polysiloxane which is one feature of the present invention. From this reaction product can be formed a photo-curable release composition by combining the reaction product with a catalytic amount of an onium salt photoinitiator.

Suitable photoinitiators for vinyloxy-functional silicone resins are the onium salts having the formulae:

$$R_2I^+MX_n^- \quad R_3S^+MX_n^- \quad R_3Se^+MX_n^- \quad R_4P^+MX_n^- \quad R_4N^+MX_n^-$$

where radicals represented by R can be the same or different organic radicals from 1 to 30 carbon atoms, including aromatic carbocyclic radicals of from 6 to 20 carbon atoms which can be substituted with from 1 to 4 monovalent radicals selected from $C_{(1-8)}$ alkoxy, $C_{(1-8)}$ alkyl, nitro, chloro, bromo, cyano, carboxy, mercapto, etc. and also including aromatic heterocyclic radicals including, e.g. pyridyl, thiophenyl, pyranyl, etc.; and $MX_n^-$ is a non-basic, non-nucleophilic anion such as $BF_4^-$, $PF_6^-$, $AsF_6^-$, $SbF_6^-$, $SbCl_6^-$, $HSO_4^-$, $ClO_4^-$, and the like.

Cure can be achieved by dissolving one of the above photoinitiators in the vinyloxy-functional silicone resin and exposing it to ultraviolet radiation. In most cases, the resin will harden and become tack-free in from one second to 10 minutes.

While it is advantageous to employ UV light to cure these resins, one is by no means restricted only to wavelengths from 190—400nm. The range of sensitivity of these resin-photoinitiators can be extended into the visibility region of the spectrum through the use of dye sensitizers, as discussed in Crivello and Lam, *Journal of Polymer Science, 17*(4), 1059 (1979); Crivello and Lam, *Journal of Polymer Science, 16,* 2441 (1978).

The amount of catalyst employed is not critical, so long as proper polymerization is effected. As with any catalyst, it is preferable to use the smallest effective amount possible; and for the purposes herein, catalyst levels of from about 1%—5% by weight have been found suitable.

The photo-curable vinyloxy-functional silicone compositions of the present invention can be applied to cellulosic and other substrates including paper, metal, foil, glass polyethylene coated Kraft paper (PEK), supercalendered Kraft paper (SCKF), polyethylene films, polypropylene films and polyester films. A photoinitiated reaction will cure the vinyloxy-functional silicone compositions of the present invention to form an abhesive surface on the coated substrate.

In order that persons skilled in the art may better understand the practice of the present invention, the following examples are provided by way of illustration, and not by way of limitation.

Example 1

Condensation of Tetramethyldisiloxane with Allyl Vinyl Ether

Approximately 0.1 parts by weight 5% catalyst prepared from chloroplatinic acid and sym-tetramethyl-divinylsiloxane ("Karsted Catalyst", U.S. 3,814,730) were added to 6.7 parts by weight 1,1,3,3-tetramethyldisiloxane. The solution was slowly added, with thorough mixing, to 8.4 parts by weight allyl vinyl ether. After addition was complete, the reaction mixture was heated to 60°C. for one hour, then 80°—85°C. for an additional 5 hours. NMR analysis of the product indicated condensation was complete and had taken place at the allyl site.

A photo-curable composition was prepared by dissolving approximately 3 parts by weight 4,4'-di-t-butyldiphenyl iodonium hexaluoroarsenate in 3 parts by weight acetone and mixing it with 97 parts by weight of the above reaction product, a vinyloxy-terminated silicone resin. This was coated on a glass plate to a thickness of 1 mil ($2{,}54.10^{-2}$ mm) and exposed to a General Electric H3T7 medium pressure mercury arc lamp at a distance of approximately six inches (15.24 cm). The silicone resin film cured in 7 seconds.

Example 2

Condensation of a ≡Si—H Functional Resin with Allyl Vinyl Ether

Approximately 0.1 parts by weight Karsted Catalyst was added to 10 parts by weight allyl vinyl ether. This solution was added dropwise to 50 parts by weight of a 90 cps (0.09 Pa.s) silicone fluid having about 12% pendent and terminal Si—H groups. When the addition was complete, the reaction mixture was heated at 80°C. for 1 hour, followed by 65—70°C. for 8 hours. Unreacted allyl vinyl ether was removed on a rotary evaporator.

A photo-curable composition was prepared by dissolving 3 parts by weight

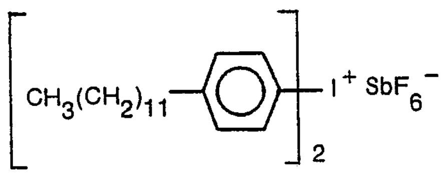

in 3 parts by weight acetone and adding this to 97 parts by weight of the above vinyloxy-functional silicone resin condensation product. When coated on supercalendered Kraft paper and cured as in Example 1 a tack-free release film was obtained in 15 seconds.

Example 3

o-allyl-2-vinyloxyethoxy benzene (AVB) was synthesized by reacting o-allylphenyl with 2-chloroethyl vinyl ether. 26 parts by weight of AVB were dissolved in 400 parts by weight toluene containing 0.05 parts by weight platinum catalyst. 150 parts by weight of 100 cps (0.1 Pa.s) dimethyl-methylhydrogen polysiloxane copolymer fluid containing about 2.5%

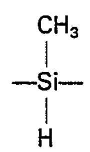

units were slowly added to the stirring toluene solution. This reaction mixture was refluxed at 114°C. for eighteen hours, after which less than 0.3% unreacted Si—H groups was detected by infrared absorption. The toluene was removed at 110°C. under vacuum to yield a clear fluid product having a viscosity of 240 cps (0.254 Pa.s).

Samples of this composition were combined with two different catalysts and their respective cure times on polyethylene coated Kraft paper (PEK) and supercalendered Kraft paper (SCK) were recorded. Cure was effected by PPG model QC 1202AN UV Processor housing two medium-pressure mercury vapor source lamps each operating at 200 watts/in.$^2$ (31 w/cm$^2$) focused power. The results are tabulated below:

| Catalyst | UV Exposure Time for Good* Cure | |
|---|---|---|
| | PEK | SCK |
| 2% $(C_{12}H_{25}Ph)_2ISbF_6$ | 0.15 sec. | 0.3 sec. |
| 4% $(C_{12}H_{25}Ph)_2IHSO_4$ | 1.5 sec. | 1.5 sec. |

* "Good Cure" results in a migration-free, no-smear, abhesive release coating.

Laminates were prepared from these coated papers using an aggressive SBR pressure-sensitive adhesive (Coated Products, Inc., No. 4950) in order to test the release pressure of the coatings. The force required to pull apart the lamina at 180°C. at a rate of 400 feet/sec. (121.9 m/s) was determined to be in the range of 40—60 grams, which is generally recognized as premium release performance in relation to aggressive adhesives.

Example 4

10 parts by weight of allyl vinyl ether, 5 parts by weight of a 150 cps dimethylvinyl-chainstopped polydimethyl siloxane fluid and 0.05 parts by weight of a platinum catalyst (hexachloroplatinic acid complexed with methylvinyl tetramer) were dissolved in 100 parts by weight toluene. 100 parts by weight of a dimethylhydrogen-chainstopped linear polydimethyl-methylhydrogen siloxane copolymer fluid (150 cps (0.15 Pa.s)) containing approximately 6.2%

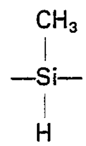

units was added slowly to the toluene solution, and this reaction mixture refluxed for 4½ hours. 5 parts by weight of n-hexene were added, and refluxing resumed for 11 hours more. Infrared examination indicated less than 0.1% unreacted Si—H groups remaining. The toluene was removed at 90°C. under aspirator vacuum. A clear amber fluid (2000 cps (2 Pa.s)) was obtained and designated Sample A.

20 parts by weight of allyl vinyl ether were dissolved in a solvent mixture consisting of 50 parts by weight toluene and 50 parts by weight hexane. 0.05 parts by weight of a platinum catalyst as described above (Sample A) were added to the solution. 100 parts by weight of a 120 cps (0.12 Pa.s) dimethylhydrogen-chainstopped polydimethyl-methylhydrogen siloxane copolymer fluid containing about 10.0%

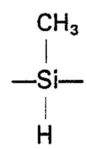

units was slowly added to the toluene hexane solution and then refluxed at 80°C. for 17 hours. No detectable unreacted Si—H was present in the reaction product. The solvent mixture was removed at 100°C under vacuum. A clear amber fluid (2500 cps (2.5 Pa.s)) was obtained and designated Sample B.

Two other samples (C and D) were prepared following the above procedures and differing only in amount of allyl vinyl ether (AVE) added and amount of product obtained.

Sufficient bis(dodecylphenyl) iodonium bisulfate catalyst was dissolved with the vinyloxy-functional fluid samples to give 2—5% by weight. The catalyzed compositions were then coated on 40-pound SCK and PEK papers using a doctor blade. The coated papers were then cured in a PPG model 1202 AN UV processor employing 2 Hanovia medium-pressure mercury vapor lamps at 200 watts/in.$^2$ (31 w/cm$^2$). The following results were recorded:

| Sample | % AVE | % Catalyst | UV Exposure Time (sec.) For Good Cure | |
|---|---|---|---|---|
| | | | PEK | SCK |
| A | 8.7% | 4.0% | 0.3 | 1.5 |
| B | 16.7% | 3.0% | 0.15 | 0.3 |
| C | 15.4% | 2.0% | 0.3 | 1.5 |
| D | 11.8% | 4.0% | 0.15 | 0.3 |

Example 5

Eugenol (4-allyl-2-methoxyphenol) was reacted with 2-chloroethyl vinyl ether to produce o-methoxy-para-allyl-2-vinyloxyethoxy benzene (MAVB). 77 parts by weight of MAVB were dispersed in approximately 350 parts by weight toluene with 0.05 parts by weight of a platinum catalyst. 200 parts by weight of a 95 cps (0,095 Pa.s) silicone copolymer fluid containing approximately 9.9% Si—H groups were added to the

toluene solution. The reaction mixture was then refluxed overnight to where Si—H functionality was below about 1%. The toluene was stripped off under vacuum to yield a 300 cps (0.3 Pa.s) fluid product.

Ten parts of the reaction product were mixed with 0.15 parts bis(dodecylphenyl) iodonium hexafluoroantimonate to make a coating composition. This was applied to PEK sheets with a doctor blade, then cured as in the above examples on a PPG 1202 GC-AN processor. Smear- and migration-free cured abhesive coatings were obtained in about 0.12 sec. cure time.

Example 6

Synthesis of o-Allyl-2-Vinyloxyethoxy Benzene

216.5 parts by weight toluene, 138.2 parts by weight 2-allyl phenol and 40 parts by weight NaOH in 60 parts by weight water were combined in a reaction vessel equipped with a Dean Stark trap, condenser and Nitrogen inlet. The components were mixed and the water removed as an azeotrope.

When all the water was removed, the toluene was dried using a Dean Stark apparatus with molecular sieves.

275 parts by weight Dimethyl Sulfoxide (DMSO) were added to the mixture and the heat lowered. 106.6 parts by weight of β-chloroethyl vinyl ether were then added slowly. After one hour, the heat was removed and the reaction mixture stirred for approximately 60 hours.

The mixture was poured into a large quantity (approximately 1000 parts by weight) of a 25% aqueous NaOH solution. Three layers separated.

The upper two layers were collected and washed twice with water, then placed in a rotary evaporator to remove the solvent.

Synthesis of o-Methoxy-para-Allyl-2-Vinyloxyethoxy Benzene

164.2 parts by weight eugenol, 275 parts by weight DMSO and 60 parts by weight finely ground NaOH were combined and mixed in a vessel equipped with a condenser and nitrogen inlet. The yellow reaction mixture exothermed to 45°C., and the temperature was slowly increased to 70°C. over about one hour, at which time 160 parts by weight β-chloroethyl vinyl ether were gradually added. The rate of addition of the ether was adjusted to keep the exotherm low.

The reaction mixture stirred at 70—75°C. for about 5 hours after addition was complete. The heat was removed and the mixture stirred overnight.

The mixture was poured into approximately 2000 parts by weight boiling water, which caused an orange oil to separate to the top.

Toluene was added to separate the layers. The aqueous layer was extracted three times with small amounts of toluene, and then the toluene was combined with the orange oil.

The organic layer was washed three times with boiling water and once with cold water, and then placed in a rotary evaporator to remove the toluene.

After drying the sample overnight with KOH some crystalline product formed. This was recrystallized from hexane and stripped off the hexane to yield a solid and a liquid product.

Gas chromatography analysis showed both products to be o-methoxy-para-allyl-2-vinyloxyethoxy benzene. The yield was 92.3% (216.3 parts), the solid melting at 34—37°C.

The above two compounds exhibiting both vinyloxy and allyloxy functionality were discovered to be suitable for use in the process of the present invention. See working examples 3 and 5, *supra.*

**Claims**

1. An organopolysiloxane having at least one Si-bonded vinyloxy functional group of the formula:

$$H_2C=CH—O—G—$$

where G is alkylene or alkylene interrupted by at least one of a divalent hetero-radical selected from —O—, divalent phenylene or substituted divalent phenylene, or combinations of such hetero-radicals.

2. The organopolysiloxane of Claim 1 wherein G is propylene.

3. The organopolysiloxane of Claim 1 wherein G has the formula:

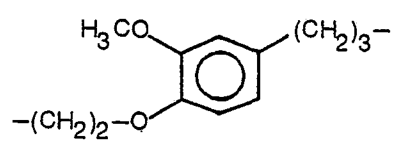

4. The organopolysiloxane of Claim 1 wherein G has the formula:

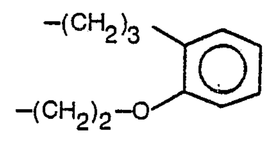

5. A polymer comprised of at least two organo-siloxane units each having at least one Si-bonded vinyloxy functional group of the formula:

$$H_2C{=}CH{-}O{-}G{-}$$

where G is alkylene or alkylene or alkylene interrupted by at least one of a divalent hetero-radical selected from —O—, divalent phenylene or substituted divalent phenylene, or combinations of such hetero-radicals.

6. A photo-polymerizable composition comprising (A) an organopolysiloxane according to any one of claims 1 to 4; and (B) a catalytic amount of an onium salt having the formula:

$$R_2I^+MX_n^-, \text{ or } R_3S^+MX_n^-, \text{ or } R_3Se^+MX_n^-, \text{ or } R_4P^+MX_n^-, \text{ or } R_4N^+MX_n^-,$$

where R can be the same or different organic radical, including aromatic carbocyclic and heterocyclic radicals, of from 1 to 30 carbon atoms, and $MN_n^-$ is a non-basic, non-nucleophilic anion.

7. A composition as defined by Claim 6 wherein the onium salt component (B) is selected from the group consisting of bis(dodecylphenyl) iodonium hexafluoroantimonate, bis(dodecylphenyl) iodonium hexafluoroarsenate, and bis(dodecylphenyl) iodonium bisulfate.

8. The composition according to Claim 7 wherein the onium salt component (B) is bis(dodecylphenyl) iodonium bisulfate.

9. A process for preparing an organopolysiloxane having at least one vinyloxy functional group comprising the steps of:

(1) providing a compound having both allyl and vinyloxy functionality;

(2) reacting said difunctional compound with a silicon-containing compound containing at least 0.5 weight percent terminal or pendent Si—H groups in the presence of a small amount of a platinum catalyst; and

(3) recovering a product which is substantially all vinyloxy-functional polysiloxane having vinyloxy functional groups of

$$H_2C{=}CH{-}O{-}G$$

where G is alkylene or alkylene interrupted by at least one of a divalent hetero-radical selected from —O—, divalent phenylene or substituted divalent phenylene, or combinations, of such hetero-radicals.

10. A process as defined in Claim 9 wherein the compound having allyl and vinyloxy functionality is allyl vinyl ether.

11. A process as defined in Claim 9 wherein the compound having allyloxy and vinyloxy functionality is synthesized from an allyloxy-functional compound and a vinyloxy-functional compound via condensation reaction.

12. A process as defined in Claim 11 wherein said allyloxy-functional compound is an ortho-allyl phenol.

13. A process as defined in Claim 11 wherein said allyloxy-functional compound is o-allylphenol and said vinyloxy-functional compound is 2-chloroethylvinyl.

14. A process as defined in Claim 11 wherein said allyloxy-functional compound is 4-allyl-2-methoxyphenol and said vinyloxy-functional compound is 2-chloroethylvinyl ether.

15. A process as defined in Claim 9 wherein said compound having allyloxy and vinyloxy functionality is o-allyl-2-vinyloxyethoxy benzene.

16. A process as defined in Claim 9 wherein said compound having an allyloxy and vinyloxy functionality is o-methoxy-para-allyl-2-vinyloxyethoxy benzene.

17. The process of Claim 9 wherein G has the formula

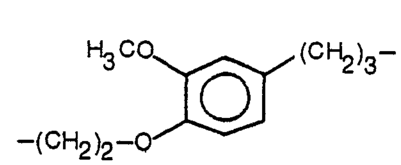

18. The process of Claim 9 wherein G has the formula

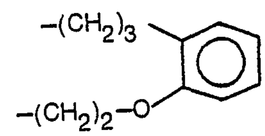

19. A process for preparing a photo-curable silicone release coating composition comprising dissolving in the product prepared as defined in Claims 9 to 18 a catalytic amount of an onium salt having the formula

$$R_2I^+MX_n^-, \text{ or } R_3S^+MX_n^-, \text{ or } R_3Se^+MX_n^-, \text{ or } R_4P^+MX_n^-, \text{ or } R_4N^+MX_n^-,$$

where R can be the same or different organic radicals, including aromatic carbocyclic and heterocyclic radicals, of from 1 to 30 carbon atoms.

20. A process as defined in Claim 19 wherein the onium salt is selected from the group consisting of bis(dodecylphenyl) iodonium hexafluoroantimonate, bis(dodecylphenyl) iodonium hexafluoroarsenate, and bis(dodecylphenyl) iodonium bisulfate.

21. A process as defined in Claim 20 wherein said onium salt is bis(dodecylphenyl) iodonium bisulfate.

22. An article comprising a solid substrate at least one surface of which is coated with the composition of Claim 6.

23. The article as defined in Claim 22 wherein the solid substrate is selected from the group consisting of paper, polyethylene coated Kraft paper (PEK) and supercalendered Kraft paper (SCR).

24. The article as defined in Claim 22 wherein said composition has been cured on said solid substrate.

25. The article as defined in Claim 24 wherein said cure is affected by brief exposure to UV radiation.

26. The article as defined in Claim 24 wherein said cured coated forms an abhesive surface thereon.

**Patentansprüche**

1. Organopolysiloxan mit wenigstens einer Silizium-gebundenen vinyloxyfunktionellen Gruppe der Formel

$$H_2C{=}CH{-}O{-}G{-}$$

worin G Alkylen oder ein Alkylen ist, welches durch wenigstens einen zweiwertigen Heterorest, ausgewählt aus —O—, zweiwertigem Phenylen oder substituiertem zweiwertigen Phenylen oder Kombinationen solcher Heteroreste, unterbrochen ist.

2. Organopolysiloxan nach Anspruch 1, worin G Propylen ist.

3. Organopolysiloxan nach Anspruch 1, worin G die Formel

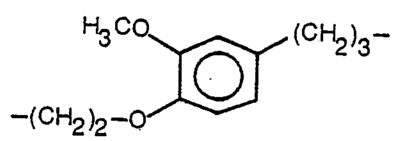

aufweist.

4. Organopolysiloxan nach Anspruch 1, worin G die Formel

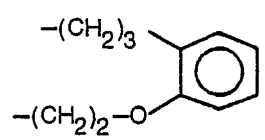

aufweist.

5. Polymerprodukt, welches wenigstens zwei Organosiloxan-Einheiten enthält, von denen jedge wenigstens eine Silizium-gebundene vinyloxyfunctionelle Gruppe der Formel

$$H_2C{=}CH{-}O{-}G{-}$$

aufweist, worin G Alkylen oder ein Alkylen, welches durch wenigstens einen zweiwertigen Heterorest, ausgewählt aus —O—, zweiwertigem Phenylen oder substituiertem zweiwertigen Phenylen oder Kombinationen solcher Heteroreste, unterbrochen ist.

6. Photopolymerisierbare Zusammensetzung, enthaltend

(A) ein Organopolysiloxan gemäß einem der Ansprüche 1 bis 4 und

(B) eine katalytische Menge eines Oniumsalzes mit der Formel:

$$R_2I^+MX_n^- \text{ oder } R_3S^+MX_n^- \text{ oder } R_3Se^+MX_n^- \text{ oder } R_4P^+MX_n^- \text{ oder } R_4N^+MX_n^-$$

worin R gleiche oder unterschiedliche organische Reste darstellt, einschließlich aromatischen Carbonsäureresten und heterocyclischen Resten mit 1 bis 30 Kohlenstoffatomen und $MN_n^-$ ein nicht-basisches, nicht-nukleophiles Anion ist.

7. Zusammensetzung nach Anspruch 6, worin das Oniumsalz der Komponete (B) ausgewählt ist aus der Gruppe bestehend aus Bis(dodecylphenyl)-iodoniumhexafluorantimonat, Bis(dodecylphenyl)-iodoniumhexafluorarsenat und Bis(dodecylphenyl)-iodoniumbisulfat.

8. Zusammensetzung nach Anspruch 7, worin die Oniumsalz-kompenente (B) Bis(dodecylphenyl)-iodoniumbisulfat ist.

9. Verfahren zur Herstellung eines Organopolysiloxans mit wenigstens einer Vinyloxyfuncktionellen Gruppe, umfassend die folgenden Schritte:

(1) Schaffung einer Verbindung mit sowohl Allyl- als auch Vinyloxyfunctionalität;

(2) Umsetzung dieser bifuncktionalen Verbindung mit einer Silizium enthaltenden Verbindung, die wenigstens 0,6 Gew.-% endständige oder anhängende Si-H-Gruppen aufweist, in Anwesenheit einer geringen Menge eines Platinkatalysators; und

(3) Gewinnung eines Produktes welches im wesentlichen ein vinyloxyfunctionelles Polysiloxan ist mit vinyloxyfunktionellen Gruppen der Formel

$$H_2C=CH—O—G—,$$

worin G Alkylen ist oder ein Alkylen, welches durch wenigstens einen zweiwertigen Heterorest, ausgewählt aus —O—, zweiwertigem Phenylen oder substituiertem zweiwertigen Phenylen oder Kombinationen solcher Heteroreste, unterbrochen ist.

10. Verfahren nach Anspruch 9, worin die Verbindung mit Allyl- und Vinyloxyfunctionalität Allylvinyläther ist.

11. Verfahren nach Anspruch 9, worin die Verbindung mit Allyloxy- und Vinyloxyfunctionalität aus einer allyloxyfunctionalen Verbindung und einer vinyloxyfunctionalen Verbindung durch Kondensationsreaktion synthetisiert ist.

12. Verfahren nach Anspruch 11, worin die allyloxyfunctionale Verbindung ein o-Allylphenyl ist.

13. Verfahren nach Anspruch 11, worin die allyloxyfunctionale Verbindung o-Allylphenol und die vinyloxyfunctionale Verbindung 2-Chloräthylvinyläther ist.

14. Verfahren nach Anspruch 11, worin die allyloxyfunctionale Verbindung 4-Allyl-2-methoxyphenol und die vinyloxyfunktionale Verbindung 2-Chloräthylvinyläther ist.

15. Verfahren nach Anspruch 9, worin die Verbindung mit Allyloxy- und Vinyloxyfunctionalität o-Allyl-2-vinyloxyäthoxybenzol ist.

16. Verfahren nach Anspruch 9, worin die Verbindung mit einer Allyloxy- und Vinyloxyfunktionalität o-Methoxy-p-allyl-2-vinyloxyäthoxybenzol ist.

17. Verfahren nach Anspruch 9, worin G die Formel

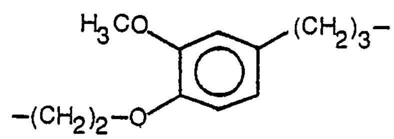

aufweist.

18. Verfahren nach Anspruch 9, worin G die Formel

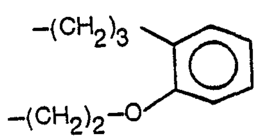

aufweist

19. Verfahren zur Herstellung einer photohärtenden Silikonantihaftüberzug-Zusammensetzung, umfassend das Auflösen einer katalytischen Menge eines Oniumsalzes mit der Formel

$$R_2I^+MX_n^- \text{ oder } R_3S^+MX_n^- \text{ oder } R_3Se^+MX_n^- \text{ oder } R_4P^+MX_n^- \text{ oder } R_4N^+MX_n^-$$

worin R gleiche oder unterschiedliche organische Reste darstellt, einschließlich aromatischen Carboxyl- und heterocyclischen Resten mit 1 bis 30 Kohlenstoffatomen in dem Produkt das nach den Ansprüchen 9 bis 18 hergestellt worden ist.

20. Verfahren nach Anspruch 19, worin das Oniumsalz ausgewählt wird aus der Gruppe bestehend aus Bis(dodecylphenyl)-iodoniumhexafluorantimonat, Bis(dodecylphenyl)-iodoniumhexafluorarsenat und Bis-(dodecylphenyl)-iodoniumbisulfat.

21. Verfahren nach Anspruch 20, worin das Oniumsalz Bis(dodecylphenyl)-iodoniumbisulfat ist.

22. Gegenstand mit einem festen Träger, von dem wenigstens eine Oberfläche mit der Zusammensetzung nach Anspruch 6 überzogen ist.

23. Gegenstand nach Anspruch 22, worin der feste Träger ausgewählt ist aus der Gruppe bestehend aus Papier, Polyäthylen-überzogenem Kraft-Papier (PEK) und superkalandriertem Kraft-Papier (SCR).

24. Gegenstand nach Anspruch 22, worin die Zusammensetzung auf einem festen Träger ausgehärtet ist.

25. Gegenstand nach Anspruch 24, worin dieses Aushärten durch kurze Belichtung mit UV-Strahlung bewirkt worden ist.

26. Gegenstand nach Anspruch 24, bei dem der gehärtete Überzug eine klebende Oberfläche ist.

**Revendications**

1. Polyorganosiloxane ayant au moins un groupe fonctionnel vinyloxy lié à Si-répondant à la formule:

$$H_2C{=}CH{-}O{-}G{-}$$

dans laquelle G représente ungroupe alkylène ou un groupe alkylène interrompu par au moins un hétéro-radical divalent choisi parmi —O—, un radical phénylène divalent ou un radical phénylène divalent substitué, ou des combinaisons de ces hétéro-radicaux.

2. Polyorganosiloxane selon la revendication.1.dans lequel G représente le groupe propylène.

3. Polyorganosiloxane selon la revendication 1 dans lequel G a pour formule:

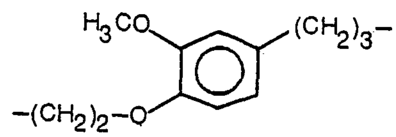

4. Polyorganosiloxane selon la revendication 1 dans lequel G a pour formule:

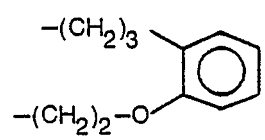

5. Polymère composé d'au moins deux motifs organosiloxane ayant chacun au moins un groupe fonctionnel vinyloxy lié à Si-répondant à la formule:

$$H_2C{=}CH{-}O{-}G{-}$$

dans laquelle G représente un groupe alkylène ou un group alkylène interrompu par au moins un hétéro-radical divalent choisi parmi —O—, un radical phénylène divalent ou un radical phénylène divalent substitué ou des combinaisons de ces hétéro-radicaux.

6. Composition photo-polymérisable comprenant (A) un polyorganosiloxane selon l'une quelconque des revendications 1 à 4 et (B) une quantité catalytique d'un sel d'onium ayant pour formule:

$$R_2I^+MX_n^-,\ \text{ou}\ R_3S^+MX_n^-,\ \text{ou}\ R_3Se^+MX_n^-,\ \text{ou}\ R_4P^+MX_n^-,\ \text{ou}\ R_4N^+MX_n^-,$$

sachant que R peut représenter des radicaux organiques identiques ou différents, y compris des radicaux aromatiques carbocycliques et hétérocycliques, ayant de 1 à 30 atomes de carbone, et $MX_n^-$ représente un anion non-basique non-nucléophile.

7. Composition selon la revendication 6 dans laquelle le constituant sel d'onium (B) est choisi dans le groupe constitué par l'hexafluoroantimoniate de bis (dodecylphényl)iodonium l'hexafluoroarséniate de bis(dodécylphényl)iodonium et le bisulfate de bis(dodécylphényl)iodonium.

8. Composition selon la revendication 7 dans laquelle le constituant sel d'onium (B) est le bisulfate de bis(dodecylphényl)iodonium.

9. Procédé de préparation d'un polyorganosiloxane ayant au moins un groupe fonctionnel vinyloxy comprenant les étapes de:

(1) apport d'un composé ayant les deux fonctions allyle et vinyloxy;

(2) réaction de ce composé difonctionnel avec un composé contenant du silicium contenant au moins 0,5% en poids de groupes Si—H terminaux ou latéraux en présence d'une petite quantité d'un catalyseur de platine; et

(3) récupération d'un produit qui est essentiellement entièrement constitué par un polysiloxane à fonction vinyloxy contenant des groupes fonctionnels vinyloxy de

$$H_2C{=}CH{-}O{-}G{-}$$

sachant que G représente ungroupe alkylène ou un groupe alkylène interrompu par au moins un hétéro-

radical divalent choisi parmi —O—, un radical phénylène divalent ou un radical phénylène divalent substitué ou des combinaisons de ces hétéro-radicaux.

10. Procédé selon la revendication 9 dans lequel le composé ayant les fonctions allyle et vinyloxy est l'éther-oxyde d'allyle et de vinyle.

11. Procédé selon la revendication 9 dans lequel on synthétise le composé ayant des fonctions allyloxy et vinyloxy à partir d'un composé à fonction allyloxy et d'un composé à fonction vinyloxy par une réaction de condensation.

12. Procédé selon la revendication 11 dans lequel le composé à fonction allyloxy est un orthoallylphénol.

13. Procédé selon la revendication 11 dans lequel le composé à fonction allyloxy est l'o-allylphénol et le composé à fonction vinyloxy est l'éther-oxyde de chloro-2-éthyle et de vinyle.

14. Procédé selon la revendication 11 dans lequel le composé à fonction allyloxy est l'allyl-4 méthoxy-2-phénol et le composé à fonction vinyloxy est l'éther-oxyde de chloro-2 éthyle et de vinyle.

15. Procédé selon la revendication 9 dans lequel le composé ayant des fonctions allyloxy et vinyloxy est l'o-allyl vinyloxy-2 éthoxybenzène.

16. Procédé selon la revendication 9 dans lequel le composé ayant des fonctions allyloxy et vinyloxy est l'o-méthoxy para-allyl vinyloxy-2 éthoxybenzène.

17. Procédé selon la revendication 9 dans lequel G a pour formule:

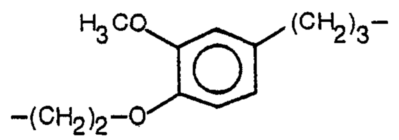

18. Procédé selon la revendication 9 dans lequel G a pour formule:

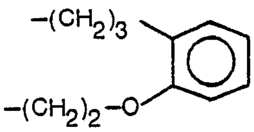

19. Procédé de préparation d'une composition de revêtement pelable de silicone photodurcissable comprenant la dissolution dans le produit préparé selon les revendications 9 à 18 d'une quantité catalytique d'un sel d'onium ayant pour formule

$$R_2I^+MX_n^-, \text{ ou } R_3S^+MX_n^-, \text{ ou } R_3Se^+MX_n^-, \text{ ou } R_4P^+MX_n^-, \text{ ou } R_4N^+MX_n^-$$

sachant que R peut représenter des radicaux organiques indentiques ou différents, y compris des radicaux aromatiques carbocycliques et hétérocycliques, ayant de 1 à 30 atomes de carbone.

20. Procédé selon la revendication 19 dans lequel le sel d'onium est choisi dans le groupe constitué par l'hexafluoroantimoniate de bis(dodécylphényl)iodonium, l'hexafluoroarséniate de bis(dodécylphényl)-iodonium, et le bisulfate de bis(dodécylphényl)iodonium.

21. Procédé selon la revendication 20 dans lequel le sel d'onium est le bisulfate de bis(dodécylphényl)iodonium.

22. Pièce comprenant un substrat solide dont au moins une surface est revêtue avec la composition de la revendication 6.

23. Pièce selon la revendication 22, dans laquelle le substrat solide est choisi dans le groupe constitué par du papier, du papier Kraft revêtu de polyéthylène (PEK) et du papier Kraft surglacé (SCR).

24. Pièce selon la revendication 22 dans laquelle on a fait durcir la composition sur le substrat solide.

25. Pièce selon la revendication 24 dans laquelle on effectue le durcissement par une brève exposition aux rayons UV.

26. Pièce selon la revendication 24 dans laquelle le revêtement durci forme sur la pièce une surface anti-adhésive.